# EUROPÄISCHE PATENTSCHRIFT

(11) **EP 0 688 711 B1**
(45) Veröffentlichungstag und Bekanntmachung des Hinweises auf die Patenterteilung: **07.04.1999**
(21) Anmeldenummer: 95106411.2
(22) Anmeldetag: 28.04.1995
(51) Int. Cl.: B62B 1/12, B62B 5/06, B62B 5/02

(54) **Zweirädrige Stechkarre mit Vertikalrahmen und Schüppe als Lastaufnahmemittel**
Two-wheeled trolley with vertical frame and a loadbearing platform
Diable à deux roues comprenant un châssis vertical et une plateforme porteuse de charge

(30) Priorität: 20.06.1994 DE 9409735 U
(43) Veröffentlichungstag der Anmeldung: 27.12.1995
(73) Patentinhaber: Bielefelder Küchenmaschinen- und Transportgeräte-Fabrik vom Braucke GmbH, D-33739 Bielefeld (DE)
(72) Erfinder: vom Braucke, Hans, D-32602 Vlotho (DE); vom Braucke, Manfred, D-33739 Bielefeld (DE)
(74) Vertreter: Strauss, Hans-Jochen, Dipl.-Phys., Dr.

(56) Entgegenhaltungen:
- WO-A-79/00188
- DE-A- 2 709 018
- DE-U- 8 706 428
- DE-U- 9 002 279
- FR-A- 548 395
- GB-A- 2 154 516
- US-A- 2 797 927
- US-A- 3 659 867
- US-A- 3 788 659
- US-A- 5 072 958

## Beschreibung

Die Erfindung betrifft eine zusammenlegbare, zweirädrige Stechkarre nach Oberbegriff des Anspruchs 1.

In vielen Fällen sollen kleinere Lasten mit einem einfachen und mitführbaren Transportmittel sicher und einfach transportiert werden, beispielsweise Einkaufsgut aus einem PKW zum Haus oder im Bereich der Freizeitbeschäftigungen, etwa bei der Vorbereitung eines Segelturns das Boot aufzurüsten, müssen viele Ausrüstungsgegenstände zum Boot gebracht werden, wobei im allgemeinen die Anleger nicht mit dem PKW erreichbar sind. In diesen Fällen eignen sich Stechkarren für den Ladungstransport. Sowohl im privaten Haushalt als auch beim Mitführen einer derartigen Stechkarre im PKW oder an Bord eines Bootes o. dgl. ist es eine Notwendigkeit, die Stechkarre möglichst flach und platzsparend zusammenlegen zu können und die Stechkarre möglichst leicht zu bauen.

Zusammenlegbare und leicht gebaute Stechkarren sind z.B. bekannt aus der US-PS 3 043 603. Die dort vorgeschlagene Stechkarre weist einen starren Vertikalrahmen mit einem Quersteg als Griff auf. An das untere Ende des Vertikalrahmens ist eine Schüppe schwenkbar um eine quer zur Ebene des Vertikalrahmens liegende Achse angelegt und im Bereich des unteren Endes sind Radträger mit den zum Rollen der Stechkarre notwendigen Rädern vorgesehen, die eingeschwenkt werden können und die Sicherungsmittel aufweisen, die die ausgeschwenkten Radträger in ihrer Stellung fixieren. Die dazu vorgesehenen, in eine Ausnehmung in der Hülse eingreifenden Nasen können jedoch insbesondere bei längerem Gebrauch nicht verhindern, daß die für ein sicheres Fahren notwendige Winkelstellung der Radträger fixiert ist. Darüber hinaus ist bei dieser Art der Fixierung bei geringen auf die Räder wirkenden Stellkräften wegen der großen Hebelübersetzung mit erheblichen Kräften an der die Sperrung bewirkenden Nase zu rechnen, so daß Deformationen im Bereich der Lagerhülse die Schwenkbarkeit der Radträger erschweren. Eine andere Art der Fixierung der Radträger beschreibt das DE-GM 19 43 253; hier wird der Radträger mit einem Sperrstift fixiert. Die in dieser Druckschrift beschriebene Stechkarre weist darüber hinaus ein aufklappbares Schüppenblatt auf und sieht die Möglichkeit vor, den als Griffbügel ausgebildeten Vertikalrahmen durch Umklappen zu verkleinern. Die die Last aufnehmende Schüppe ist ebenfalls aufklappbar an den Vertikalrahmen angelenkt. Eine sehr aufwendige Konstruktion beschreibt das DE-GM 19 82 824, bei dem das Einschwenken der Räder zwangsweise mit dem Umlegen des Griffteiles des Schiebebügels kombiniert ist. Weitere Stechkarren, vorzugsweise zum Transport von Reisegepäck, beschreiben die US-PS 4 335 895 und CH-PS 217 650.

Die EP 0 352 515 A2 schließlich betrifft eine zusammenlegbare zweirädrige Stechkarre zum Transport kleiner Lasten im Privat- oder Freizeitbereich mit einem von einem Paar Längsprofilen gebildeten Vertikalrahmen, dessen unteres Ende ein Fahrgestell mit zwei mit einem Rad versehene, um eine in Vertikalrahmen-Ebene verlaufende Achse schwenkbare und mit Sicherungsmitteln ausgeschwenkt festlegbare Radträger sowie eine um eine rechtwinklig zu den Schwenkachsen der Radträger verlaufende weitere Schwenkachse schwenkbare Schüppe als Lastaufnahmemittel aufweist, und dessen oberes Ende als Griffende ausgebildet ist, wobei die Längsprofile des Vertikalrahmens zwischen Fahrgestell und Griffende und durch mindestens einen Querriegel miteinander verbunden und im Bereich des Querriegels in ein oberes und ein unteres Längsprofil geteilt sind sowie ein sperrbares Gelenk aufweisen, zum coplanaren Einklappen des oberen Vertikalrahmenteils in das untere Vertikalrahmenteil, wobei Radträger und Schüppe an die unteren Enden der zugeordneten Längsprofile bzw. an dazu parallele, in Vertikalrahmen-Ebene liegend umgebogene Enden des Querriegels angelenkt sind und mit Sperrmitteln zum Sichern des ausgeklappten Zustandes versehen sind. Bei dieser für (relativ) kleine Lasten geeigneten Stechkarre wirken sich größere Lasten so aus, daß die Radträger aus den gesperrten Stellungen auswandern können und so die Stechkarre ihre Manöverierfähigkeit verliert.

US-A-3 659 867 beschreibt eine gattungsgemäße Stechkarre bei der Sperrung der Radträger in ausgeklappten Stellung anhand einer Spurstange vorgesehen ist.

Von diesem Stand der Technik ausgehend stellt sich die der Erfindung zugrunde liegende Aufgabe, eine Weiterentwicklung einer gattungsgemäßen Stechkarre derart vorzuschlagen, daß bei Erhalt der Vorteile der sichere Transport auch schwererer Lasten und das Bewegen ergoermöglicht wird, wobei sie in einfacher Weise von der Ruhestellung in die Gebrauchsstellung und umgekehrt gebracht werden kann, so daß sie in Ruhestellung möglichst wenig Raum einnimmt, und wobei die Stechkarre selbst wirtschaftlich herstellbar sein soll.

Diese Aufgabenstellung wird durch das Kennzeichen des Hauptanspruchs gelöst; vorteilhafte Weiterbildungen und bevorzugte Ausführungsformen beschreiben die Unteransprüche.

Bei der Ausführung wird eine den Abstand haltende Spurstange zwischen die Radträger so eingefügt, die diese in ihrer Arbeitsstellung fixiert, daß die ausgeschwenkten Radträger in der Arbeitstellung eindeutig festgehalten werden, unabhängig von Belastung, zu überfahrenden Unebenheiten o.dgl. Die zwischen die Radträger einfügbare Spurstange hält die ausgeschwenkten Radträger zwangsweise in der der Spur entsprechenden Position, so daß ein Einklappen der Radträger, was unter besonderen Fahrzuständen möglich wäre, unterbunden ist; dabei ist es ohne weiteres möglich, die Radträger auch mit den aus der EP 0 352 515 A2 bekannten Radträgersicherungen zu versehen, was das Entfalten der Stechkarre aus der Ruhestellung in die Arbeitsstellung erleichtert, dabei ist es selbstverständlich, daß die Spurstange beim Transport geringer Lasten eingeschwenkt werden muß. Gleichzeitig kann die Spurstange als "Tritt" benutzt werden, um beim Kippen der Stechkarre aus der Ruhe- (Lade-)Stellung in die Arbeits-(Fahr-) Stellung mit dem Fuß einen Gegendruck ausüben zu können. Es entsteht ein Abstand zwischen der Achse der Räder und der Spurstange, wobei der Abstand der Anlagen der Spurstange an der inneren Trägergabel des Radträgers größer als der Abstand der Achsen der Räder von der Ebene des Vertikalrahmens ist. Mit der "vor" der Achse vorgesehenen Lage der Spurstange wird ein Abstand vorgegeben, der für das Kippen vorteilhaft ist, da das Kippen um die Rad-Achse erfolgt und so ein gewisser Hebelarm gegeben ist. Je grösser dieser Unterschied wird, um so günstiger wird das Kippmoment, das bei einer gegebenen Kraft auf die Stechkarre ausgeübt wird, um diese aus der Ruhe- (Lade-)Stellung in Arbeits- (Fahr-)Stellung zu bringen.

Vorteilhaft ist die Spurstange schwenkbar um eine rechtwinklig zu den Längsprofilen des Vertikalrahmens liegende Achse, die zum Einschwenken zwischen die Radträger um eine Achse rechtwinklig zu den Längsprofilen des Vertikalrahmens an diese angelenkt; dazu weisen die Längsprofile im Bereich ihrer unteren Enden je ein Lager auf, zur Aufnahme von Auslegern, mit denen die Spurstange zwischen die Radträger einschwenkbar ist. Dabei weist die Spurstange freie, gegen die innere Trägergabel des Radträgers oder gegen eine mit der Trägergabel verbundene Anlage am Radträger anliegende Enden auf, wobei jede der inneren Trägergabel mit einem das zugeordnete freie Ende aufnehmenden, den Schwenkwinkel begrenzenden Anschlag versehen ist, mit dem eine Begrenzung des Schwenkwinkel erreicht wird, so daß die Spurstange sicher in ihrer Position gehalten wird und so auch die Position der Radträger sichern kann.

Die Spurstangen weisen dabei freie, gegen die innere Trägergabel oder gegen eine mit der inneren Trägergabel verbundene Anlage am Radträger anliegende Enden auf, wobei jede der inneren Trägergabel mit einem das zugeordnete freie Ende aufnehmenden Anschlag versehen ist. Dabei sind vorteilhaft die freien Enden der Spurstange mit einem Formstück versehen, das etwa formschlüssig in den Anschlag einführbar ist. Durch diese Anschläge wird sowohl die Begrenzung des Schwenkwinkels als auch die richtige Positionierung der Spurstange erreicht. Die Formstücke sind in einer Ausführungsform als Führungskeile und die Anschläge als zu diesen Führungskeilen korrespondierend ausgebildet, wobei vorzugsweise die Anschläge mit Rastmitteln versehen sind. Mit Hilfe des Führungskeils wird eine progressiv verlaufende Positions-Sicherung erreicht, wobei mit sich verstärkender Kraft der Führungskeil in seine Aufnahme gedrückt wird. Zur Sicherung können Mittel vorgesehen sein, die als rastende Mittel den Keil in der keilförmigen Aufnahme sichern. In einer anderen Ausführungsform sind die Formstücke zylindrisch und die Anschläge korrespondierend dazu ausgebildet, wobei vorzugsweise mindestens eines der beiden zylindrischen Formstücke mit einem Führungsstift und der dieses Formstück aufnehmende Anschlag mit einer Bohrung zum Einführen dieses Führungsstiftes versehen ist. In einer Weiterbildung dieser zweiten Ausführungsform umfassen die zylindrischen die Enden aufnehmenden Anschläge diese um mindestens 180°, wobei mindestens eine der dieses Ende umfassende Wandung des Anschlags als elastisch verformbare Wandung ausgebildet ist. Durch diese Ausbildung des Anschlags wird eine sichere Haltung des zylindrischen Endes der Spurstange erreicht, und -bei dem Umfassen um mehr als 180° auch ein Klemmen. Vorteilhaft ist auch hier, wenn der Anschlag Rastmittel aufweist, zum Halten der Spurstange. In einfacher Weise können diese Rastmittel dadurch gegeben sein, daß der elastisch verformbare Wandungsteil des Anschlags von der inneren Wandung des Gabelträgers durch einen Schlitz abgetrennt ist. Dieser abgetrennte Teil wirkt wie eine Feder, durch die die elastische Verformbarkeit verbessert wird, und die das Halten besorgt; wird das Ende dieses abgetrennten Teils mit einer Nase versehen und ist weiter am korrespondierenden Ende der Spurstange eine entsprechende Ausnehmung vorgesehen, wird die Rastverbindung dadurch gebildet. In beiden Fällen werden die Formstücke von den Anschläge zumindest teilweise formschlüssig umfaßt, wobei die Führungen einen Kraftschluß ermöglichen. Die zylindrische Ausbildung ist im einfachsten Fall, die nach außen fortgesetzten zylindrischen Enden der Spurstange, die so abgelängt sind, daß ihre Länge dem freien Abstand zwischen den beiden Radträgern entspricht, wobei es sich von selbst versteht, daß etwa vorhandene Anschläge zu berücksichtigen sind. Es versteht sich von selbst, daß an den freien Enden der Spurstange auch Aufnahmen vorgesehen sind, die mit Vorsprüngen zusammenwirken, die an den inneren Seiten der Trägergabeln der Radträger vorgesehen sind. Dabei nehmen die an der Spurstange vorgesehenen Aufnahmen die Vorsprünge an den Radträgern etwa formschlüssig auf und sind in vorteilhafter Weiterbildung auch mit Rastmitteln versehen, zum rastenden Halten der Vorsprünge.

Als weitere Alternative sind die Spurstangen derart ausgebildet, daß ihre freien Enden mit Aufnahmen versehen sind, die mit Vorsprüngen zusammenwirken, die an den inneren Seiten der Trägergabeln der Radträger vorgesehen sind. Dabei können diese Aufnahme -wie schon beschrieben- keilförmig oder teilzylindrisch ausgebildet sein, die die an den Trägergabeln vorgesehenen Vorsprünge, die korrespondierende Formen aufweisen, etwa formschlüssig aufnehmen. Auch diese Aufnahmen werden vorteilhaft mit Rastmitteln versehen, zum rastenden Halten der Vorsprünge in den Aufnahmen.

Unabhängig von der Ausbildung dieser Spurstange und ihrer Widerlager an den Radträgern werden für eine vorteilhafte Weiterbildung die Radträger an ihren Außenseiten mit Schlittenbügeln versehen; diese Schlittenbügel sind derart ausgebildet, daß sie in ausgeschwenktem Zustand die Räder überragen und so ein Drücken oder Ziehen der Stechkarre über unbefahrbare Wege, wie etwa Treppen erlauben. Vorteilhaft ist dabei, wenn jeder Schlittenbügel mit seinem freien Ende gegen das zugeordnete Längsprofil abgestützt ist, wobei zur Abstützung eine das Längsprofil umgreifende Schlittenbügel-Schwenkhülse vorgesehen ist, wodurch beide Schlittenbügel aus der Ruhestellung in die Arbeitsstellung zu verschwenken sind. Damit wird eine Schwenkbarkeit erreicht, die auch hier erlaubt, die beiden Schlittenbügel in die von den beiden Längsprofilen gegebene Ebene einzuschwenken. Da die Ausladung der Schlittenbügel etwa dem Radius der zwischen die Längsträger einschwenkbaren Räder entspricht, lassen sich die Schlittenbügel zusammen mit den Radträgern nahezu coplanar zwischen die Längsträger einklappen, so daß auch diese so ausgebildete Stechkarre noch zusammenlegbar ist. Vorteilhaft dabei ist es, wenn der Schlittenbügel radträgerseitig im Bereich der Achse des Rades an den Radträger oder mit einer Schwenkhülse an das untere Ende des zugeordneten Längsprofils angebunden ist. Durch diese Anordnung können sich Schlittenbügel und Spurstange weder im Gebrauch noch in Ruhestellung gegenseitig behindern.

In einer bevorzugten Ausbildung sind die Griffe zum Schieben der Stechkarre als in sich geschlossene Ringgriffe ausgebildet, die mit einer Schwenkhülse an dem oberen Längsprofils angeordnet und um die Achse dieses Längsprofiles schwenkbar sind. Mit dieser Ausbildung wird erreicht, daß die Griffe, die zum Bewegen auch schwererer Lasten ergometrisch ausgebildet sein müssen, schwenkbar ausgebildet sind, die als in sich geschlossene Ringgriffe ausgeformt und gegenüber der Schubrichtung in einem Winkel stehen, der gegenüber der Ebene der Längsprofile einen Winkel von etwa 30° bis 45° und gegenüber den rechtwinklig dazu durch jedes der Längsprofile verlaufenden Ebenen einen Winkel von etwa 15° bis 25° bilden. Durch die Schwenkbarkeit der Griffe ist ein coplanares Zusammenfalten mit der Stechkarre coplanar möglich; dazu sind diese Griffe verschwenkbar an den oberen Enden der Längsprofile angeordnet und können in den Raum zwischen den Längsprofilen eingeschwenkt werden, so daß das coplanare Zusammenfalten der Stechkarre erreicht wird.

Dabei ist es vorteilhaft, diese Schwenkhülse von einer unteren und einer oberen Lagerhülse in Position zu halten. Arretierungsmittel sorgen dafür, daß die in Ruhestellung oder in Arbeitsstellung geschwenkten Griffe nicht über die diesen Stellungen zugeordneten Endpositionen hinaus geschwenkt werden können. Diese Arretierungsmittel werden zum einen von einer Sperrnase an der Stirnseite der Schwenkhülse, die in eine an dem korrespondierenden Lagerring vorgesehene korrespondierende Ausnehmung eingreift, gebildet, wobei die Schwenkhülse gegenüber dem anderen der beiden Lagerringe mittels einer elastisch-nachgiebigen Zwischenlage abgestützt ist, die das für das Ausrasten der Sperrnase aus der Ausnehmung notwendige Spiel liefert. Zum anderen werden sie gebildet von einem mit einem radial abstehenden Vorsprung an einem Lagerring zusammenwirkenden Anschlagfinger an der Schwenkhülse, wobei sowohl die eine als auch die andere Art der Arretierung als auch beide gemeinsam eingesetzt werden. Die Arretierung mit Vorsprung und Sperrfinger wird vorzugsweise zum Festlegen des Schwenkgriffes in Arbeitstellung benutzt. Dabei sind die Lagerringe an dem jeweiligen Längsprofil festgelegt, und zwar in einem Abstand, der der Länge der Schwenkhülse des Griffes, ggf. mit elastisch-nachgiebiger Zwischenlage, entspricht.

In einer der bevorzugten Ausführungsformen sind die beiden Längsprofile unterteilt in ein oberes und ein unteres Längsprofil, die gelenkig miteinander verbunden sind. Das Gelenk ist dabei mittels im Gelenkbereich angeordneter Sperrmittel sowohl in Arbeitsstellung als auch in Ruhestellung festlegbar. Als Sperrmittel eignet sich eine Sperrfalle, die übergeklappt die Bewegung des Gelenks verhindert, aufgeklappt jedoch das Verschwenken des einen Längsprofilteils gegenüber dem anderen erlaubt. Auf diese Weise wird eine zum Transport uch schwerer Lasten geeignete Stechkarre erhalten, die sich coplanar zusammenlegen läßt, so daß die zusammengeschwenkte Stechkarre platzsparend aufbewahrt werden kann, wobei diese Sperrfalle ein unbeabsichtigtes Auseinanderklappen der Stechkarre verhindert.

In einer anderen ebenfalls bevorzugten Ausführungsform bilden die Schwenkhülse des Schlittenbügels und die Schwenkhülse der Griffe ein integrales Formstück; durch diese Ausbildung bilden auf jeder Seite Griff und Schlittenbügel eine quasi einstückige Einheit und werden mit einer Bewegung ausgeschwenkt. Vorteilhaft dabei ist es, wenn die Griffe mit einer weiteren Abstützung gegen die Längsprofile abgestützt sind, wobei die freien Enden der weiteren Abstützungen von der an dem Längsprofile vorgesehenen Schwenkhülse aufgenommen sind. Da hier sowohl Griffe als auch Schlittenbügel zwischen die Längsprofile geschwenkt werden können, ergibt sich auch hier eine Zusammenlegbarkeit, die ein platzsparendes Aufbewahren der Stechkarre in Ruhestellung ermöglicht.

Das Wesen der Erfindung wird an Hand der in den Figuren 1 bis 9 dargestellten Ausführungsbeispielen näher erläutert; dabei zeigen
- Fig. 01:: Seitansicht der Stechkarre;
- Fig. 02:: Fahrgestell der Stechkarre mit Spurstange in Arbeitstellung (strich-punktiert: Arretierstellung);
- Fig. 03:: Spurstange mit zylindrischem Endstück und Paßstift, Fig. 3a: Seitansicht,
Fig. 3b: Einzelheit Anschlag, Seitansicht, geschnitten gemäß b-b Fig. 3a;
Fig. 3c: Einzelheit Anschlag, Queransicht, gemäß Pfeil c Fig. 3a;
- Fig. 04:: Einzelheit Schwenkgriffe - Griffe in Arbeitsstellung, Fig. 4a: Rückwärtige Ansicht,
Fig. 4b: Aufsicht, geschnitten, gemäß b-b Fig. 4a;
- Fig. 05:: Einzelheit Schwenkgriffe,
Fig. 5a: Rückwärtige Ansicht,
Fig. 5b: Aufsicht, geschnitten, gemäß b-b Fig. 5a;
- Fig. 06:: Einzelheit Griff-Schwenklager,
Fig. 6a: Ansicht,
Fig. 6b: Oberer Lagerring, geschnitten gemäß Schnittlinie Fig. 6a,
Fig. 6c: Einzelheit oberer Lagerring mit Schwenkhülse, abnngebrochen,
Fig. 6d: Unterer Lagerring, geschnitten gemäß Schnittlinie Fig. 6a
- Fig. 07:: Stechkarre mit Schlittenbügeln, Frontansicht;
- Fig. 08:: Stechkarre mit Schlittenbügeln, Seitansicht;
- Fig. 09:: Stechkarre zusammengeklappt, Frontansicht.

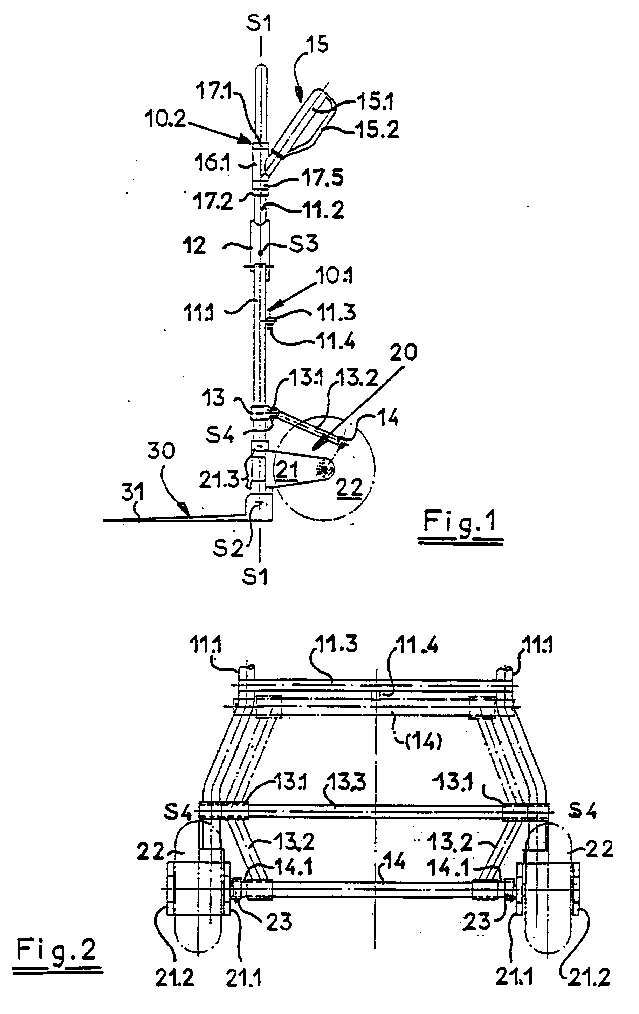

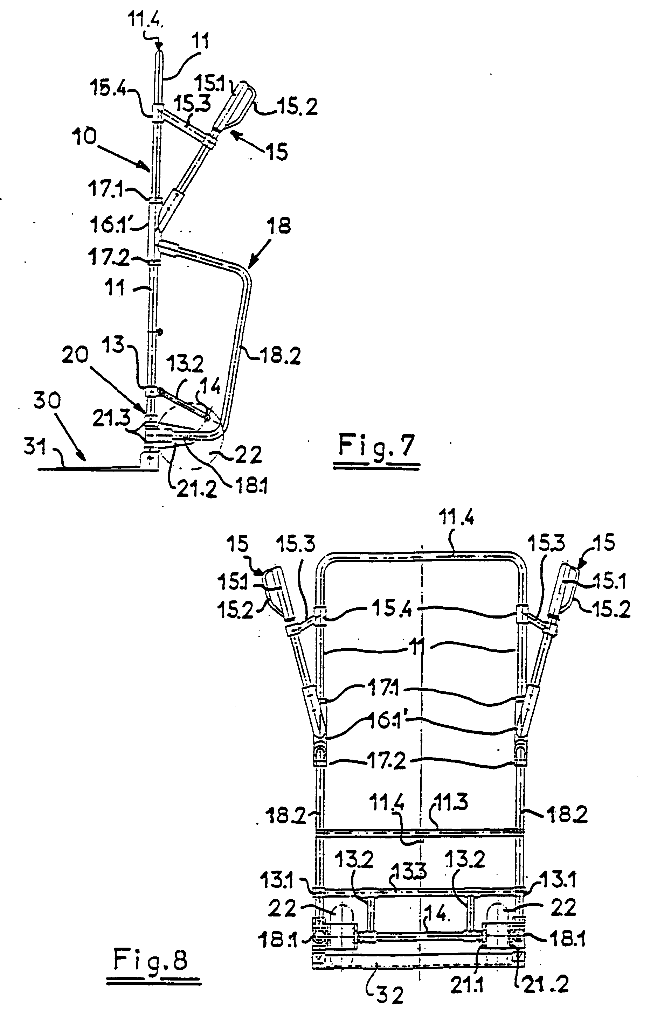

Die Figur 1 zeigt eine Stechkarre in Seitansicht; der Griffbügel 10 trägt an seinem unteren Ende das Fahrgestell 20 und die die Last aufnehmende Schüppe 30, wobei das Fahrgestell 20 von den mit Rädern 22 versehenen Radträgern 21 gebildet ist, die mit Radträger-Hülsen 21.3 um eine parallel zu den Achsen der Längsprofile 11 (bzw. 11.1 und 11.2) liegende erste Schwenkachse S1 eine schwenkbar an den Längsprofilen 11 des Vertikalrahmen 10 gelagert und gegen diese abgestützt sind, und wobei die Schüppe 30 mit Schüppenblatt 31 und Schüppenrücken 32 (Fig. 8) um eine Schwenkachse S2, rechtwinklig zu den Längsprofilen 11 des Vertikalrahmens 10 verschwenkbar sind, die in ein unteres Längsprofil 11.1 und ein oberes Längsprofil 11.2 unterteilt sind, wobei die unteren Längsprofile den unteren Vertikalrahmen 10.1 und die oberen Längsprofile 11.2 den oberen Vertikalrahmen 10.2 bilden. Der untere und der obere Teil des Vertikalrahmens sind um eine dritte Schwenkachse S3 verschwenkbar aneinander gelenkt, wobei das Gelenk mit einer Sperrfalle 12 sowohl in Arbeits- als auch in Ruhestellung gesichert werden kann. Der untere Vertikalrahmen 10.1 ist oberhalb der Radträger-Schwenkhülsen 21.3 mit einer Lagerung 13 für eine Spurstange 14 versehen, die das jeweilige untere Längsprofil hülsenartig umfaßt, wobei die Hülse ein Lager 13.1 aufweist, in dem Ausleger 13.2 derart gelagert sind, daß diese um eine parallel zur Vertikalrahmen-Ebene und rechtwinklig zu den Achsen der Längsprofile 11 liegende Schwenkachse S4 verschwenkbar sind, wobei die freien Enden dieser Ausleger 13.2 die Spurstange 14 tragen. An die oberen Längsprofile 11.2 sind beidseits Schiebegriffe 15 angesetzt, die mit einer Schiebegriff-Hülse 16.1 um die Achse der Längsprofile 11 schwenkbar an diesen befestigt sind. Die Schiebegriffe 15 sind als Ringgriffe ausgebildet, die gegenüber der von dem Vertikalrahmen 10 gebildeten Ebene gegen die Schubrichtung geneigt sind, wobei der Neigungswinkel im Bereich von etwa 30° bis 45° liegt.

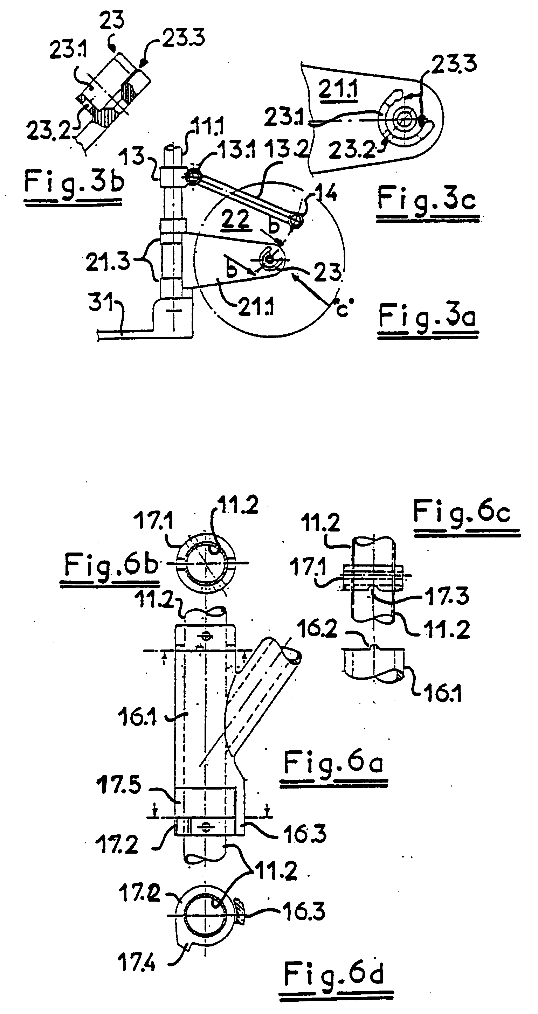

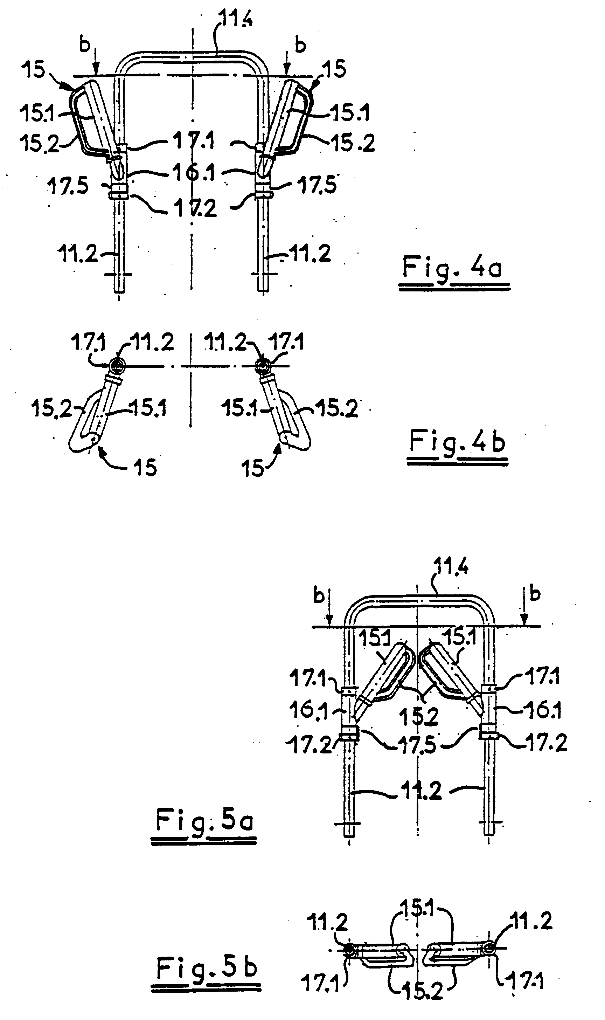

Die Figur 2 zeigt das Fahrgestell 20 in einer rückwärtigen Ansicht; an die -hier nach außen gekröpft dargestellten- unteren Enden der unteren Längsprofile 11.1 sind die Radträger 21 angesetzt, die mit Radgabeln 21.1 und 21.2 versehen sind, zwischen denen die Räder 22 laufen. Oberhalb der Schwenkhülsen 21.3 der Radträger 21 sind die Lager 13, 13.1 für die Spurstange 14 angeordnet, die die um die rechtwinklig zu den Achsen der Längsprofile 11 verlaufende Schwenkachse S4 verschwenkbaren Ausleger 13.2 aufnehmen, deren freie Enden die die parallel zu der Schwenkachse S4 verlaufende Spurstange 14 tragen. Die beiden Lager 13.1 der Ausleger 13.2 sind ihrerseits gegeneinander mittels einer Querstrebe 13.3 abgestützt. Die Spurstange 14 ist zwischen die Radträger 21 geschwenkt (durchgezogene Darstellung) und stützt sich gegen die jeweils inneren Gabeln 21.1 der Radträger 21, so daß die Radträger 21 in ihre ausgeschwenkte Stellung gezwungen werden. Dabei dienen die an den Innenseiten der inneren Gabeln 21.1 der Radträger 21 vorgesehenen Anschläge 23 zur Aufnahme der freien Enden der Spurstange 14. Dieser Anschlag ist in den Figuren 3 näher dargestellt; die von den in den Lagern 13.1 schwenkbare Auslegern 13.2 getragene (nicht voll ausgeschwenkt dargestellte) Spurstange 14 wird mit ihren freien Enden in die Anschläge 23 eingedrückt, wobei die Wandung 23.1 der Anschläge 23 die zylindrischen Enden um etwas mehr als 180° umfassen und so einen teilweisen Formschluß herstellen, wodurch zum einen ein Rückhalt und zum anderen der Kraftschluß zwischen den Endflächen der Spurstange 14 und den Anlageflächen der inneren Gabeln 21.1 der Radträger 21 gewährleistet sind.

Die Figuren 4 bis 6 zeigen die Ausbildung der Schiebegriffe 15; diese sind als Ringgriffe ausgebildet, so daß die schiebenden Hände der den Transport durchführenden Person die Kraft auf die Stechkarre übertragen können. Die eigentlichen Griffe 15.1 sind dabei mit einem haptisch günstigen Überzug versehen und durch einen den Ring schließenden Handschutzbügel 15.2 ausgestattet, so daß die Handrücken beim Schieben der Stechkarre geschützt sind. Diese Ausformung der Griffe und ihre Neigung, wie in Figur 4 in Arbeitsstellung dargestellt, etwa 15° bis 25° gegenüber den Längsprofilen 11 und gegenüber der Ebene des Vertikalrahmens 10 um etwa 30° bis 45° (erkennbar in der Figur 7) betragen, tragen zu ergometrisch günstigen Verhältnissen bei, so daß das Bewegen auch einer voll beladenen Stechkarre nicht zu übermäßigen Belastungen der Hände und der die Zugkraft des Körpers übertragenden Gelenke führen kann. In der in Figur 5 dargestellten Ruhestellung sind die Griffe in den oberen Teil des Vertikalrahmens eingeklappt und liegen in wesentlichen im Vertikalrahmen; ein geringfügiges Herausragen der Handschutzbügel stört dabei nicht. Die schwenkbare Lagerung der Griffe 15 an den oberen Längsprofilen 11.2 (oder den durchgehenden Längsprofilen 11) erfolgt mit einer Griff-Schwenkhülse 16.1, die zwischen einem oberen Lagerring 17.1 und einem unteren Lagerring 17.2 gehalten ist. Der obere Lagerring 17.1 weist an seiner der Schwenkhülse 16.1 zugewandten Stirnseite eine Ausnehmung 17.3 auf, in die eine an der korrespondierenden Stirnseite der Schwenkhülse 16.1 vorgesehenen Sperrnase 16.2 eingreift, wenn die richtige Position des Griffes 15 erreicht ist, wobei diese Ausnehmung sowohl in Arbeits- als auch in Ruhestellung vorgesehen sein kann. Eine elastisch-nachgiebige Zwischenlage 17.5, die zwischen der anderen Stirnseite der Schwenkhülse 16.1 und dem dieser Seite zugeordneten, unteren Lagerring 17.2, gibt der Schwenkhülse 16.1 den für das ordnungsgemäße Ein- und Ausrasten notwendigen Bewegungsspielraum und liefert über seine elastischen Rückstellkraft die dazu notwendigen Kräfte. Um unter Krafteinwirkung eine sichere Anlage in der Arbeitsstellung zu erreichen, ist die Schwenkhülse 16.1 mit einem Sperrfinger 16.3 versehen, der im ausgeschwenkten Zustand an einem radial abstehenden Vorsprung 17.4 des unteren Lagerringes 17.2 anliegt. Diese mechanische Sperre der Schwenkbewegung sichert durch das ordnungsgemäße Anliegen des Sperrfingers 16.3 an dem Vorsprung 17.4 die einwandfreie Position des Griffes 15 und erlaubt eine ordnungsgemäße Kraftübertragung.

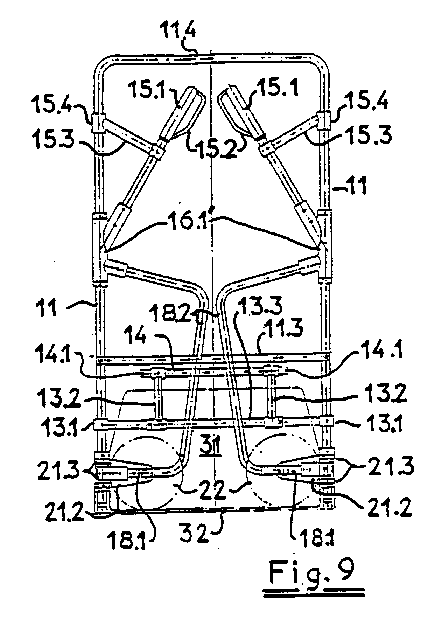

Eine besondere Ausführungsform ist in den Figuren 7 bis 9 dargestellt; hierbei sind beide Radträger 21 mit je einem Schlittenbügel 18 versehen, und jeder dieser Schlittenbügel 18 ist gegen das zugeordnete Längsprofil 11 abgestützt, wobei diese Abstützung mit einer Schlittenbügel-Schwenkhülse erfolgt. Dieser Schlittenbügel 18 wird dabei mit seinem untere Ende 18.1 an der Außenseite der äußeren Gabeln 21.2 der Radträger 21 angeordnet, so daß eine Kollision mit der Spurstange 14 ausgeschlossen ist; die Anordnung liegt dabei so, daß ein Übergang vom Rad 22 zum Kufenteil 18.2 des Schlittenbügels 18 gewährleistet ist, der so geformt ist, daß -gesehen in seitlicher Projektion- das Kufenteil 18.2 eine etwa tangentiale Fortsetzung des Rades 22 darstellt, so daß ein Übergang vom Rollen zum Gleiten auf dem Kufenteil 18.1 insbesondere bei Absätzen oder bei Treppen in einfacher Weise ermöglicht wird, wobei die Radträger und somit auch die Schlittenkufen zwangsweise mit der zwischen die Radträger eingeschwenkten Spurstange gesichert werden. Die hochgeklappte Schüppe schützt dabei die eingeschwenkten Radträger 21 mit den Rädern 22 durch das Schüppenblatt, während der Schüppenrücken 32 sich schützend gegen die Radbandagen legt und ggf. die eingeschwenkten Räder 22 (wie auch in der in den Figuren 1 bis 6 dargestellten Ausführungsform ohne Schlittenbügel 18) klemmend hält. Die Schlittenbügel-Schwenkhülse kann dabei im Bereich der unteren Längsprofile 11.1 vorgesehen und unabhängig von der Schiebegriff-Schwenkhülse 16.1 sein; hierbei kann die Stechkarre, mit unterem Vertilalrahmen 10.1 und oberem Vertikalrahmen 10.2 versehen, zusammengeklappt werden, wobei das Klappen vorteilhaft derart eingerichtet ist, daß der obere Vertikalrahmen 10.2 und der untere Vertikalrahmen 10.1 nicht coplanar ineinander, sondern mit einem geringen Abstand aneinander geklappt werden, da sonst eine Kollision zwischen den eingeklappten Griffen und den eingeklappten Schlittenbügeln nicht ausgeschlossen werden kann. Wenn das Zusammenklappen des Vertikalrahmens 10 nicht notwendig ist, bilden -wie in den Figuren 7 bis 9 dargestellt-Schiebegriff-Schwenkhülse 16.1 und Schlittenbügel-Schwenkhülse eine Einheit 16.1', so daß beim Ausschwenken der Schiebegriffe 15 automatisch auch die Schlittenbügel 18 mit ausgeschwenkt werden. Vorteilhaft werden hier die Schiebegriffe 15 nochmals gegen die oberen Enden der Längsprofile 11 abgestützt; diese Abstützung erfolgt mit Stützstreben 15.3, die in Schwenkhülsen 15.4 enden, so daß die Abstützung mit den Schiebegriffen verschwenkt werden kann.

## Patentansprüche

1. Zusammenlegbare, zweirädrige Stechkarre mit einem Vertikalrahmen, gebildet von einem Paar durch mindestens einen Querriegel miteinander verbundenen Längsprofilen (11; 11.1, 11.2), an deren untere Enden bzw. an dazu parallele, in Vertikalrahmen-Ebene liegend umgebogene Enden eines Querriegels als Fahrgestell (20) zwei mit einem Rad (23) versehene, um eine in Vertikalrahmen-Ebene verlaufende Achse (S1) schwenkbare und mit Sicherungsmitteln ausgeschwenkt festlegbare Radträger (21) und als Lastaufnahmemittel (30) eine um eine rechtwinklig zu den Schwenkachsen (S1) der Radträger (21) verlaufende weitere Schwenkachse (S2) schwenkbare Schüppe (31) angelenkt sind, und deren obere Enden als Griffenden ausgebildet sind, wobei an die Längsprofile (11) eine um eine rechtwinklig zu den Längsprofilen des Vertikalrahmens liegende Achse (S4) zwischen die Radträger (21) einschwenkbare Spurstange (14) angelenkt ist, **dadurch gekennzeichnet**, daß jedes der Längsprofile (11) im Bereich seines unteren Endes ein Lager (13.1) aufweist, zur Aufnahme von Auslegern (13.2), mit denen die Spurstange (14) zwischen die Radträger (21) einschwenkbar ist, wobei der Abstand des Spurstangen-Anschlags (23) an der inneren Trägergabel (21.1) des Radträgers (21) größer ist, als der Abstand der Achsen der Räder (22), jeweils von der Ebene des Vertikalrahmens (10).

2. Stechkarre nach Anspruch 1, **dadurch gekennzeichnet**, daß die Spurstange (14) so ausgebildet und angeordnet ist, daß sie beim Kippen der Stechkarre Von Ruhe-(Lade-)Stellung in Arbeits-(Fahr-)Stellung als Tritt benutzbar ist, wobei mit der durch einen Gegendruck auf sie wirkenden Kraft über den Abstand Spurstange (14)/Achsen der Räder (22) als Hebelarm ein um die Achsen der Räder (22) wirkendes, das Kippen der Stechkarre begünstigendes Kippmoment erzeugbar ist.

3. Stechkarre nach Anspruch 1 oder 2, **dadurch gekennzeichnet**, daß die Spurstange (14) freie, gegen die inneren Trägergabeln (21.1) der Radträger (21) oder gegen damit verbundene Anlage an den Radträger (21) anliegende Enden (14.1) aufweist, wobei jede der inneren Trägergabeln (21.1) mit einem das zugeordnete freie Ende aufnehmenden Anschlag (23) versehen ist, der die freien, als Formstück ausgebildeten Enden (14.1) der Spurstange etwa formschlüssig in den Anschlag (23) aufnimmt.

4. Stechkarre nach Anspruch 1 oder 2, **dadurch gekennzeichnet**, daß die Spurstange (14) freie Enden aufweist, an denen Aufnahmen vorgesehen sind, die mit Vorsprüngen zusammenwirken, die an den inneren Seiten der Trägergabeln (21.1) der Radträger (21) vorgesehen sind, wobei die Aufnahmen die freien, als Formstück ausgebildeten Enden (14.1) der Spurstange etwa formschlüssig in den Aufnahmen aufnehmen.

5. Stechkarre nach Anspruch 3 oder 4, **dadurch gekennzeichnet**, daß die Formstücke als Führungskeile und die Anschläge (23) als zu diesen Führungskeilen korrespondierend dazu ausgebildet sind, wobei vorzugsweise die Anschläge mit Rastmitteln versehen sind.

6. Stechkarre nach Anspruch 3, 4 oder 5, **dadurch gekennzeichnet**, daß die Formstücke zylindrisch und die Anschläge (23) bzw. Aufnahmen korrespondierend dazu ausgebildet sind, wobei vorzugsweise mindestens eines der beiden zylindrischen Formstücke mit einem Führungsstift (14.1) und der dieses Formstück aufnehmende Anschlag (23) bzw. Aufnahme mit einer Bohrung (23.2) zum Einführen dieses Führungsstiftes (14.1) versehen ist.

7. Stechkarre nach Anspruch 6, **dadurch gekennzeichnet**, daß die zylindrischen, die Enden (14.1) der Spurstange (14) aufnehmenden Anschläge (23) bzw. Aufnahmen diese Enden um mindestens 180° umfassen, wobei mindestens eine der dieses Ende umfassende Wandung (23.1) jedes der Anschläge (23) als elastisch verformbare Wandung ausgebildet ist.

8. Stechkarre nach Anspruch 7, **dadurch gekennzeichnet**, daß der elastisch verformbare Teil der Wandung (21.1) des Anschlags (23) bzw. der Aufnahme von der inneren Wandung des Gabelträgers (21.1) durch einen Schlitz (23.3) abgetrennt ist.

9. Stechkarre nach Anspruch 6, 7 oder 8, **dadurch gekennzeichnet**, daß der Anschlag (23) bzw. die Aufnahme zum Halten der Spurstange (14) Rastmittel aufweist.

10. Stechkarre nach einem der Ansprüche 1 bis 9, wobei jeder der Radträger (21) insbesondere außenseitig mit einem Schlittenbügel (18) versehen ist, **dadurch gekennzeichnet**, daß jeder Schlittenbügel (18) mit seinem oberen freien Ende gegen das zugeordnete Längsprofil (11; 11.1) abgestützt ist, wobei zur Abstützung eine das Längsprofil (11; 11.1) umgreifende Schlittenbügel-Schwenkhülse vorgesehen ist, und daß zur radträgerseitigen Anbindung das untere Ende (18.1) des Schlittenbügels (18) im Bereich der Achse des Rades an dem Radträger (21) befestigt oder mit einer Schwenkhülse an das untere Ende des zugeordneten Längsprofils (11; 11.1) angelenkt ist.

11. Stechkarre nach einem der Ansprüche 1 bis 10, **dadurch gekennzeichnet**, daß die Griffenden als geschlossene Ringgriffe (15) ausgebildet sind, die an den zugeordneten Längsprofilen (11; 11.2) um eine in der Ebene des Vertikalrahmens (10) liegende Achse (S1) schwenkbar angeordnet sind, wobei jeder Griff (15) eine Schwenkhülse (16.1) aufweist, die auf dem Längsprofil (11; 11.2) mit einem oberen und mit einem unteren Lagerring (17.1, 17.2) festgelegt ist.

12. Stechkarre nach Anspruch 11, **dadurch gekennzeichnet**, daß die Ringgriffe derart ausgeformt sind, daß sie gegenüber der Schubrichtung in einem Winkel stehen, der gegenüber der Ebene der Längsprofile einen Winkel von etwa 30° bis 45° und gegenüber den rechtwinklig dazu durch jedes der Längsprofile verlaufenden Ebenen einen Winkel von etwa 15° bis 25° bildet.

13. Stechkarre nach Anspruch 11 und 12, **dadurch gekennzeichnet**, daß Arretiermittel vorgesehen sind, bei denen ein Vorsprung (16.2) mit einer Ausnehmung (17.3) zusammenwirken, die zumindest an einer der Stirnseite der Schwenkhülse (16.1) und des zugeordneten Lagerringes (17.1) vorgesehen sind, wobei eine elastische Zwischenlage (17.5) vorzugsweise an der mit den Arretiermitteln versehenen Stirnseite abgewandten Stirnseite der Schwenkhülse (16.1) die den für das Ein- und Ausrasten notwendigen Bewegungsspielraum und die dafür notwendigen Kräfte liefert.

14. Stechkarre nach Anspruch 11, 12 oder 13, **dadurch gekennzeichnet**, daß die Schwenkhülse (16.1) einen radial abstehenden, axial verlängerten Sperrfinger (16.3) und einer der Lagerringe dazu korrespondierend einen radial abstehenden Vorsprung (17.4) aufweisen, wobei Vorsprung (17.4) und Sperrfinger (16.3) miteinander zusammenwirkend die Schwenkbewegung der Schwenkhülse (16.1) begrenzen.

15. Stechkarre nach einem der Ansprüche 10 bis 13, sowie nach Anspruch 14, **dadurch gekennzeichnet**, daß die Schwenkhülse des Schlittenbügels und die Schwenkhülse (16.1) der Griffe (15) ein integrales Formstück (16.1') bildet.

16. Stechkarre nach Anspruch 15, **dadurch gekennzeichnet**, daß die Griffe (15) mit einer weiteren Abstützung gegen die Längsprofile (11; 11.2) abgestützt sind, wobei die freien Enden der weiteren Abstützungen (15.3) von der an den Längsprofilen (11; 11.2) vorgesehenen Schwenkhülse (15.4) aufgenommen sind.

## Claims

1. Collapsible, two-wheeled trolley with a vertical frame formed of a pair of longitudinal profiles (11; 11.1, 11.2) connected to each other by at least one cross-bracket, on the lower ends of which or on bent-over ends of a cross-bracket lying parallel thereto in the plane of the vertical frame there are linked as a chassis (20) two wheel holders provided with a wheel (23) which swivel about an axis (S1) running in the plane of the vertical frame and are secured by fastening means when swivelled out, and as loading bearing means (30) a scoop (31) which can be swivelled about a further swivelling axis (S2) running perpendicularly to the swivelling axes (S1) of the wheel holders (21), and the upper ends of which are formed as grips, whereby linked to the longitudinal profiles (11) is a track rod (14) which can be swivelled between the wheel holders (21) about an axis (S4) perpendicular to the longitudinal profiles of the vertical frame, characterised in that each of the longitudinal profiles (11) has a bearing (13.1) in the area of its lower end for taking up brackets (13.2) with which the track rod (14) is swivelled between the wheel holders (21), whereby the distance of the track rod stop (23) on the inner carrier fork (21.1) of the wheel holder (21) is greater than the distance of the axes of the wheels (22) from the vertical frame level (10) in each case.

2. Trolley according to claim 1, characterised in that the track rod (14) is designed and arranged in such a way that on tipping the trolley from the rest (loading) position into the operating (moving) position it can be used as a step, whereby with the force acting upon it through a counterpressure, over the distance track rod (14)/ wheel axes (22) as a lever arm, a tilting moment acting about the axes of the wheels (23) can be produced which favours tipping of the trolley.

3. Trolley according to claim 1 or 2, characterised in that the track rod (14) has free ends (14.1) resting against the inner carrier forks (21.1) of the wheel holders (21) or against the stop of the wheel holder (21) connected thereto, whereby each of the inner carrier forks (21.1) is provided with a stop (23) to receive the allocated free end, said stop holding the free ends (14.1) of the track rod which are formed as shaped sections in an interlocking manner in the stop.

4. Trolley according to claim 1 or 2, characterised in that the track rod (14) has free ends on which holders are provided which act in conjunction with projections provided on the inner sides of the carrier forks (21.1) of the wheel holders (21), whereby the holders hold the free ends (14.1), formed as a shaped section, of the track rod in an interlocking manner in the holder.

5. Trolley in accordance with claim 3 or 4, characterised in that the shaped sections are designed as guide wedges and the stops (23) as corresponding to these guide wedges, whereby the stops are preferably provided with locking means.

6. Trolley according to claim 3, 4, or 5, characterised in that the shaped sections are cylindrical and the stops (23) or holders are designed to correspond thereto, with preferably at least one of the two cylindrical shaped sections being provided with a guide pin (14.1) and the stop (23) or holder for holding this shaped section being provided with a bore (23.3) for inserting this guide pin (14.1).

7. Trolley according to claim 6, characterised in that the cylindrical stops (23) or holders which hold the ends (14.1) of the track rod (14), surround these ends by at least 180°, at least one of wall (23.1) of each stop (23) surrounding this end being designed as an elastically deformable wall.

8. Trolley according to claim 7, characterised in that the elastically deformable section of the wall (21.1) of the stop (23) or the holder is separated from the inner wall of the fork carrier (21.1) by a groove (23.3).

9. Trolley according to claim 6, 7 or 8, characterised in that the stop (23) or the holder for holding the track road (14) has locking means.

10. Trolley according to any one of claims 1 to 9, in which each wheel holder (21) is provided, more particularly on the outside, with a sliding frame (18), characterised in that each sliding frame (18) is supported at its upper free end against the assigned longitudinal profile (11; 11.1), whereby for support a swivelling sleeve surrounding the longitudinal profile (11; 11.1) is provided, and in that for the connection at the wheel holder the lower end (18.1) of the sliding frame (18) is fastened to the wheel holder (21) in the area of the axis of the wheel or is linked with a swivelling sleeve to the lower end of the assigned longitudinal profile (11; 11.1).

11. Trolley according to any one of claims 1 to 10, characterised in that the grip ends are formed as closed ring grips (15) which are linked to the assigned longitudinal profiles (11; 11.2) so as to swivel about an axis (S1) lying in the plane of the vertical frame (10), each grip (15) having a swivelling sleeve (16.1) which is fixed on the longitudinal profile (11; 11.2) with an upper and a lower bearing ring (17.1, 17.2).

12. Trolley according to claim 11, characterised in that the ring grips are shaped in such a way that in respect of the direction of pushing they are at an angle, which in respect of the plane of the longitudinal frames forms an angle of approximately 30° to 45°, and in respect of each plane running perpendicularly through each longitudinal profile forms an angle of approximately 15° to 25°.

13. Trolley according to claim 11 and 12, characterised in that stopping means, in which a projection (16.2) operates in conjunction with a recess (17.3), are provided and are arranged in at least one of the faces of the swivelling sleeve (16.1) and the assigned bearing ring (17.1), whereby an elastic intermediate layer (17.5), preferably on the face of the swivelling sleeve (16.1) opposite to the face provided with the stopping means, provides the necessary movement clearance for locking and unlocking and the forces required therefor.

14. Trolley according to claim 11, 12 or 13, characterised in that the swivelling sleeve (16.1) has a radially projecting, axially elongated blocking finger (16.3) and one of the bearing rings corresponding thereto has a radially projecting projection (17.4), whereby the projection (17.4) and the blocking finger (16.3) act together with each other to limit the swivelling movement of the swivelling sleeve (16.1).

15. Trolley according to any one of claims 10 to 13, as well as claim 14, characterised in that the swivelling sleeve of the sliding frame and the swivelling sleeve (16.1) of the grips (16) form an integral shaped piece (16.1').

16. Trolley according to claim 15, characterised in that the grips (15) are supported with a further support against the longitudinal profiles (11; 11.2), whereby the free ends of the additional supports (15.3) are held by the swivelling sleeve (15.4) provided on the longitudinal profiles (11; 11.2).

## Revendications

1. Diable repliable à deux roues, comportant un cadre vertical formé par une paire de profilés longitudinaux (11 ; 11.1, 11.2) reliés l'un à l'autre par au moins une traverse, à l'extrémité inférieure desquels ou à des extrémités recourbées parallèles à celle-ci, situées dans le plan du cadre vertical, d'une traverse, sont articulés, en tant que châssis (20), deux supports de roue (21) pourvus d'une roue (22), en basculement autour d'un axe (S1) qui s'étend dans le plan du cadre vertical, et susceptibles d'être fixés dans la position basculée par des moyens de blocage, et, en tant que moyens récepteurs de charge (30), une pale (31) en basculement autour d'un autre axe de basculement (S2) qui s'étend à angle droit par rapport aux axes de basculement (S1) des supports de roue (21) ; et dont les extrémités supérieures sont réalisées sous forme d'extrémités de préhension, une barre directrice (14) susceptible de basculer entre les supports de roue (21) autour d'un axe (S4) situé à angle droit par rapport aux profilés longitudinaux du cadre vertical étant articulée sur les profilés longitudinaux, caractérisé en ce que chacun des profilés longitudinaux (11) comprend dans la zone de son extrémité inférieure un palier (13.1) pour recevoir des bras (13.2) avec lesquels la barre directrice (14) peut basculer entre les supports de roue (21), la distance de la butée de barre directrice (23) sur la fourche porteuse intérieure (21.1) du support de roue (21) étant supérieure à la distance des axes des roues (22), respectivement depuis le plan du cadre vertical (10).

2. Diable selon la revendication 1, caractérisé en ce que la barre directrice (14) est réalisée et agencée de manière à être utilisable comme pédale lors du basculement du diable depuis la position de repos (de chargement) dans la position de travail (de déplacement), et grâce au produit de la force agissant par une contre-pression sur ladite barre par la distance entre la barre directrice (14) et les axes des roues (22) en tant que bras de levier, on peut générer un moment de basculement qui agit autour des axes des roues (22) et qui favorise le basculement du diable.

3. Diable selon l'une ou l'autre des revendications 1 et 2, caractérisé en ce que la barre directrice (14) comporte des extrémités libres (14.1) qui s'appuient contre les fourches porteuses intérieures (21.1) des supports de roue (21) ou contre un appui relié au support de roue (21), chacune des fourches porteuses intérieures (21.1) étant pourvue d'une butée (23) qui reçoit l'extrémité libre associée et qui reçoit les extrémités libres (14.1) de la barre directrice réalisées comme une pièce façonnée, par exemple en coopération de formes dans la butée (23).

4. Diable selon l'une ou l'autre des revendications 1 et 2, caractérisé en ce que la barre directrice (14) comporte des extrémités libres auxquelles sont prévus des logements qui coopèrent avec des saillies prévues sur les côtés intérieurs des fourches porteuses (21.1) des supports de roue (21), les logements recevant les extrémités libres (14.1), réalisées comme des pièces façonnées, de la barre directrice par exemple en coopération de formes dans les logements.

5. Diable selon l'une ou l'autre des revendications 3 et 4, caractérisé en ce que les pièces façonnées sont réalisées à la manière de coins de guidage et les butées (23) à la manière de pièces correspondantes à ces coins de guidage, les butées étant pourvues de préférence de moyens d'enclenchement.

6. Diable selon l'une des revendications 3, 4 ou 5, caractérisé en ce que les pièces façonnées sont réalisées cylindriques et les butées (23) ou logements sont réalisés de manière correspondante à celles-ci, l'une au moins des deux pièces façonnées cylindriques étant pourvue de préférence d'une tige de guidage (14.1) et la butée (23) ou le logement recevant cette pièce façonnée étant pourvu(e) d'un perçage (23.2) pour introduire cette tige de guidage (14.1).

7. Diable selon la revendication 6, caractérisé en ce que les butées cylindriques (23) ou logements recevant les extrémités (14.1) de la barre directrice (14) entourent ces extrémités sur au moins 180°, l'une au moins des parois (23.1), entourant cette extrémité, de chacune des butées (23) étant réalisée sous forme d'une paroi élastiquement déformable.

8. Diable selon la revendication 7, caractérisé en ce que la partie élastiquement déformable de la paroi (23.1) de la butée (23) ou du logement est séparée vis-à-vis de la paroi intérieure de la fourche porteuse (21.1) par une fente (23.2).

9. Diable selon l'une des revendications 6, 7 ou 8, caractérisé en ce que la butée (23) ou le logement comprend des moyens d'enclenchement pour retenir la barre directrice (14).

10. Diable selon l'une quelconque des revendications 1 à 9, dans lequel chacun des supports de roue (21) est pourvu d'un étrier de chariot (18), en particulier du côté extérieur, caractérisé en ce que chaque étrier de chariot (18) est appuyé par son extrémité supérieure libre contre le profilé longitudinal associé (11 ; 11.1), une douille de basculement pour I'étrier de chariot qui entoure le profilé longitudinal (11 ; 11.1) étant prévue pour le support, et en ce que pour le raccordement du côté support de roue, l'extrémité inférieure (18.1) de l'étrier de chariot (18) est fixée sur le support de roue (21) dans la zone de l'axe de la roue ou bien en ce qu'elle est articulée avec une douille de basculement sur l'extrémité inférieure du profité longitudinal associé (11 ; 11.1).

11. Diable selon l'une quelconque des revendications 1 à 10, caractérisé en ce que les extrémités de préhension sont réalisées sous forme de poignées annulaires fermées (15) qui sont agencées en basculement sur les profilés longitudinaux associés (11 ; 11.2) autour d'un axe (S1) situé dans le plan du cadre vertical (10), chaque poignée (15) comprenant une douille de basculement (16.1) qui est fixée sur le profité longitudinal (11 ; 11.2) par des anneaux de montage supérieur et inférieur (17.1, 17.2).

12. Diable selon la revendication 11, caractérisé en ce que les poignées annulaires sont formées de manière à se trouver sous un angle par rapport à la direction de poussée, lequel forme un angle d'environ 30° à 45° par rapport au plan des profilés longitudinaux et un angle d'environ 15° à 25° par rapport aux plans perpendiculaires à ceux-ci et s'étendant à travers chacun des profilés longitudinaux.

13. Diable selon les revendications 11 et 12, caractérisé en ce qu'il est prévu des moyens d'arrêt dans lesquels une saillie (16.2) coopère avec un évidement (17.3), qui sont prévus sur l'une au moins des faces frontales de la douille de basculement (16.1) et de l'anneau de montage associé (17.1), et en ce qu'une couche intermédiaire élastique (17.5) prévue de préférence sur la face frontale de la douille de basculement (16.1) détournée de la face frontale pourvue des moyens d'arrêt, fournit la marge de manoeuvre nécessaire pour l'enclenchement et le déclenchement et assure les forces nécessaires à cet effet.

14. Diable selon les revendications 11, 12 ou 13, caractérisé en ce que la douille de basculement (16.1) comprend un doigt de verrouillage (16.3) dépassant radialement et prolongé axialement, et en ce que l'un des anneaux de montage comprend en correspondance une saillie en dépassement radial (17.4), la saillie (17.4) et le doigt de verrouillage (16.3) limitant par coopération mutuelle le mouvement de basculement de la douille de basculement (16.1).

15. Diable selon l'une quelconque des revendications 10 à 13 et selon la revendication 14, caractérisé en ce que la douille de basculement de l'étrier de chariot, et la douille de basculement (16.1) des poignées (15), forment une pièce façonnée intégrale (16.1').

16. Diable selon la revendication 15, caractérisé en ce que les poignées (15) sont appuyées par un autre support contre les profilés longitudinaux (11 ; 11.2), les extrémités libres des autres supports (15.3) étant reçues par la douille de basculement (15.4) prévue sur les profilés longitudinaux (11 ; 11.2).
